Europäisches Patentamt

European Patent Office

Office européen des brevets

(11) Veröffentlichungsnummer: **0 285 819**
**A2**

(12) **EUROPÄISCHE PATENTANMELDUNG**

(21) Anmeldenummer: 88103360.9

(22) Anmeldetag: 04.03.88

(51) Int. Cl.⁴: **G21C 19/34 , G21C 19/10**

(30) Priorität: 08.04.87 DE 3711844

(43) Veröffentlichungstag der Anmeldung:
12.10.88 Patentblatt 88/41

(84) Benannte Vertragsstaaten:
BE CH DE FR GB LI SE

(71) Anmelder: Deutsche Gesellschaft für
Wiederaufarbeitung von Kernbrennstoffen
mbH
Hamburger Allee 4 Postfach 1407
D-3000 Hannover 1(DE)

(72) Erfinder: Lahr, Helfrid, Dr.
Hirschdamm 39
D-3002 Wedemark(DE)
Erfinder: Betz, Gerhard
Messmerstrasse 20
D-8755 Alzenau(DE)

(54) Vorrichtung zum Herausziehen von mehreren Brennstäben aus einem Brennelement.

(57) Die Erfindung betrifft eine Vorrichtung zum Herausziehen von mehreren Brennstäben aus einer
Brennelementstruktur mit einer klemmfähigen Greifvorrichtung zum Erfassen der Brennstäbe. Zum sichereren fernhantierten Herausziehen aus einem bestrahlten Kernreaktorbrennelement weist die Vorrichtung eine obere Führungsstange (13) und ein untere
Spannstange (11) horizontal übereinanderliegend
auf. Senkrecht zu den Stangenachsen sind von den
Stangen (11 und 13) durchdrungene Klemmplatten
(25) mit Abstand zueinander parallel angeordnet.
Zwischen den Klemmplatten (25) sind auf den Stangen (11 und 13) Distanzringe (27, 29) angeordnet,
wobei die Breite auf der unteren Spannstange (11)
angebrachten Distanzringe (29) geringfügig kleiner
ist als der Durchmesser der Brennstäbe (31). Über
eine Spannvorrichtung (33, 35) sind die Klemmplatten (25) zusammendrückbar. Es wird ein einfaches
Aufsetzen der Brennstabziehzange erreicht.

FIG.1

EP 0 285 819 A2

## Vorrichtung zum Herausziehen von mehreren Brennstäben aus einem Brennelement

Die Erfindung betrifft eine Vorrichtung zum Herausziehen von mehreren Brennstäben aus einer Brennelementstruktur mit einer klemmfähigen Greifvorrichtung zum Erfassen der Brennstäbe.

Aus der EP-A 0066695 ist zur Vereinzelung von Brennstäben eines Brennelements eine Ziehzange bekannt, die nach dem Abschneiden des Kopfstückes und des Fußstückes des Brennelements die Brennstabenden stirnseitig erfaßt. Über das senkrecht stehende Brennelement wird ein Greifmechanismus geführt, der Bohrungen aufweist, in die die stirnseitigen Enden der Brennstäbe eingeführt werden müssen. Über ein flexibles Zwischenstück werden die Brennstabenden bei einer Verspannung zweier Druckplatten gegeneinander radial festgeklemmt. Das flexible Zwischenglied besteht aus Kunststoff oder Kautschuk und weist aufgrund der radioaktiven Strahlung und der mechanischen Beanspruchung eine nicht ausreichende Standfestigkeit bzw. Standzeit auf. Nach dem Klemmen der Brennstäbe werden diese nach oben aus dem Brennelement herausgezogen. Diese Vorrichtung benötigt eine ausreichende Gebäudehöhe, die mindestens die doppelte Länge eines Brennelements haben muß. Als wesentlicher Nachteil ist aber anzusehen, daß die Brennstäbe kopfmäßig eingefädelt werden müssen. Aufgrund der möglicherweise verbogenen oder verzogenen Brennstäbe kann dieses schwierig sein, da dieses mittels Fernhantierungseinrichtungen erfolgen muß.

Der Erfindung liegt die Aufgabe zugrunde, eine Vorrichtung der eingangs genannten Art zu - schaffen, mit der ein einfacheres und sicheres Erfassen der Brennstabenden zum Herausziehen möglich wird. Die Fernhantierungseignung soll sichergestellt und verbessert werden.

Die Aufgabe wird erfindungsgemäß durch die im Kennzeichen des Anspruchs 1 genannten Merkmale gelöst.

Durch die erfindungsgemäße Vorrichtung können die Brennstäbe einer Reihe in ausgerichteter Weise erfaßt und aus dem Brennelement herausgezogen werden. Dazu wird die Vorrichtung senkrecht zur Längsachse des Brennelements an- bzw. aufgesetzt. Dabei umfassen die Klemmplatten kammartig die Brennstäbe der ersten oder obersten Reihe des Brennelements. Über das Anziehen der Spannvorrichtung werden die Brennstäbe zwischen den Klemmplatten eingeklemmt. Vorhandene Lücken in der Brennstabmatrix werden durch die Distanzringe zwischen den Klemmplatten kompensiert. Über die Handhabung der Vorrichtung kann die Vorrichtung zum Herausziehen der Brennstäbe aus der Brennelementstruktur stationär gehalten oder verfahren werden, je nach dem, ob das Brennelement während des Ausziehens verfahren wird oder stationär verbleiben soll.

Die Erfindung hat den wesentlichen Vorteil, daß sie in der Nähe der Gitterplatte des Brennelements aufgesetzt werden kann. Dort sind durch die Gitterstruktur definierte Abstände der Brennstäbe vorhanden. Als weiterer wesentlicher Vorteil wird die Erleichterung der Fernhantierung angesehen, die sich darin äußert, daß bei dem Aufsetzen der Vorrichtung die Klemmplatten nicht ganz genau positioniert sein müssen, da sie nach dem Auftreffen auf den runden Brennstabrücken umfangsmäßig zur Klemmposition hingeführt werden.

In vorteilhafter Ausgestaltung der Erfindung laufen die Klemmplatten nach unten in sich verjüngenden Enden aus. Hierdurch wird eine verbesserte Einfädelung der Klemmplatten in die Lücken zwischen den Brennstäben erreicht.

In weiterer vorteilhafter Ausgestaltung der Erfindung sind in den Endbereichen der oberen und unteren Stangen Druckplatten angeordnet. Diese Druckplatten begrenzen die Klemmplattenanordnung, die auf den beiden übereinanderliegenden Stangen vorhanden ist. Jede Druckplatte ist dabei auf beiden Stangen gelagert. Durch das Zusammendrücken der Druckplatten im Bereich der unteren Spannstange werden die Klemmplatten gegeneinander verspannt.

Eine weitere vorteilhafte Ausgestaltung der Erfindung wird im Kennzeichen des Anspruchs 4 offenbart. Die von einem Bügel miteinander verbundenen Zuglaschen ergeben eine sichere Möglichkeit, die Ziehkraft der Vorrichtung aufzubringen. Das Anbringen der Zuglaschen in einer ortsfesten Lagerstelle erlaubt das Verfahren des Brennelements zum Herausziehen der Brennstäbe.

Durch die Erfindung wird eine für die Fernhantierung gut geeignete Brennstabziehzange geschaffen, die eine Selbstzentrierung aufweist. Die Brennstäbe können mit dieser erfindungsgemäßen Vorrichtung auch aus einem horizontal liegenden Brennelement herausgezogen werden, was für die umgebende Anlage bauliche Vorteile hat.

Anhand der Zeichnung wird nachstehend ein Ausführungsbeispiel der Erfindung näher erläutert. Es zeigt

Fig. 1 eine Vorderansicht der Vorrichtung zum Herausziehen von Brennstäben im Teilschnitt,

Fig. 2 im Ausschnitt eine Draufsicht der Fig. 1,

Fig. 3 in Seitenansicht eine Klemmplatte.

Die in der Zeichnung offenbarte Vorrichtung weist eine untere Spannstange 11 auf, über der parallel angeordnet eine Führungsstange 13 liegt. Der Abstand zwischen diesen beiden Stangen 11 und 13 ist durch zwei Druckplatten 15 und 17 sichergestellt, die in den Endbereichen der Spannstange 11 und der Führungsstange 13 auf diesen gelagert sind. Die Führungsstange 13 hat an jedem Ende einen Begrenzungskopf 19, 21 größeren Durchmessers, deren kreisringförmige Innenflächen gegenüber den Druckplatten 15 bzw. 17 benachbart anliegen. Die Spannstange 11 hat an dem einen Ende ebenfalls einen Begrenzungskopf 23.

Zwischen den Druckplatten 15 und 17 sind senkrechte Klemmplatten 25 in gleichmäßigen Abständen zueinander parallel angeordnet, die von den beiden Stangen 11 und 13 durchdrungen werden. Zwischen den Klemmplatten 25 sind Distanzringe 27, 29 angeordnet, wobei die Breite der auf der Führungsstange 13 sitzenden Distanzringe 27 dem Durchmesser der zu ergreifenden Brennstäbe 31 entspricht. Die Distanzringe 29 auf der unteren Spannstange 11 sind geringfügig kleiner als der Durchmesser der Brennstäbe 31.

Außerhalb der Klemmplattenanordnung 25 weist die Vorrichtung am rechten Ende der Spannstange 11 eine auf dem Ende der Spannstange 11 geführte Schraubspindel 33 auf, die in ein Innengewinde 35 einer auf dem Begrenzungskopf 21 der Führungsstange 13 gelagerten Zuglasche 37 greift. Es ist auch möglich, statt der Schraubspindel 30 eine fernbedienbare Mutter auf die Spannstange 11 aufzusetzen, die dann in diesem Bereich ein Außengewinde aufweisen muß.

Auf der linken Seite der Vorrichtung ist eine weitere Zuglasche 39 angeordnet, die auf den Begrenzungsköpfen 19 und 23 von Führungsstange 13 und Spannstange 11 gelagert ist. Die beiden Zuglaschen 37 und 39 sind über einen hier nicht dargestellten festen Bügel starr miteinander verbunden.

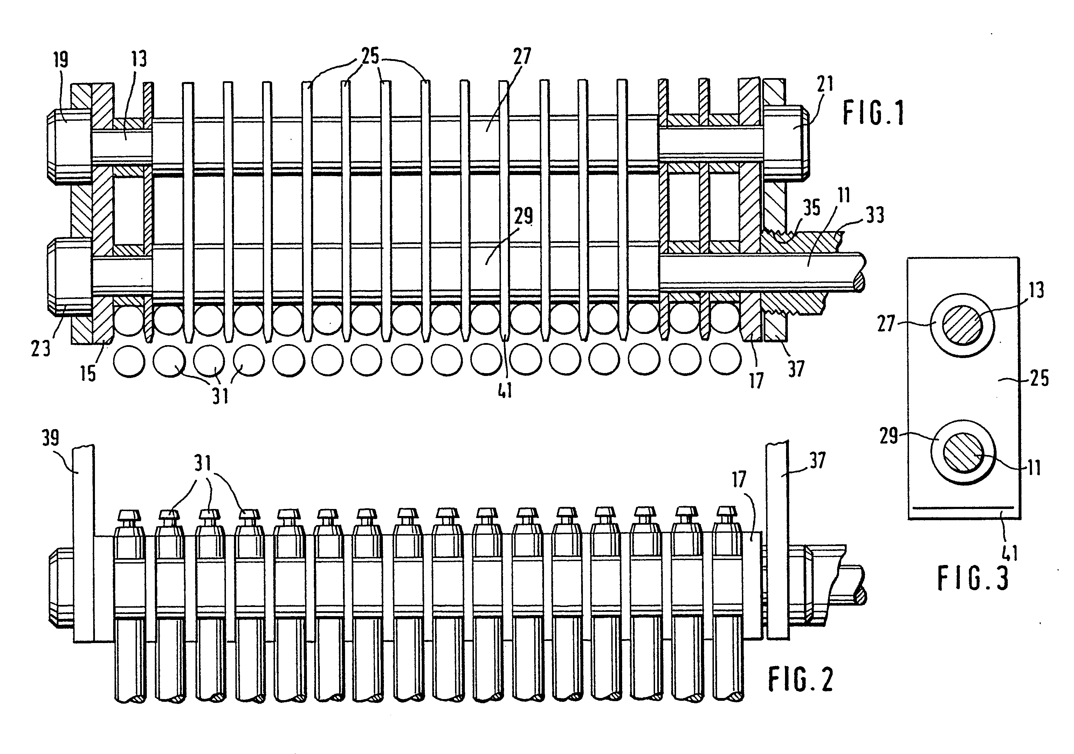

Die Klemmplatten 25 weisen eine rechtförmige Seitenausbildung auf (Fig. 3) und sind an ihren unteren Enden 41 verjüngt ausgebildet.

Die Klemmplatten 25 sind in der gezeigten Darstellung zwischen die in einer Reihe nebeneinander liegenden Brennstäbe 31 eines Brennelements eingebracht und durch Verspannung der beiden Druckplatten 15, 19 gegeneinander dort festgeklemmt.

Die Wirkungsweise der Vorrichtung ist wie folgt.

Nach dem Abtrennen des Fuß-und Kopfstückes eines Brennelements und dem horizontalen Fixieren desselben wird mit einem Manipulator, der an eine Handhabung der Brennstabziehzange anfaßt, diese auf dem Brennelement aufgesetzt. Dabei wird die Brennstabziehzange durch die verjüngten Enden 41 der Klemmplatten 25 zentriert, die auf dem Umfang der Brennstäbe 31 in ihre Position hineingleiten können. Über einen fernbedienbaren Schrauber wird die Schraubspindel 33 nach innen verdreht, so daß die beiden Druckplatten 15 und 17 gegeneinander verspannt werden. Dadurch wird das gesamte Paket der Klemmplatten 25 verspannt und klemmt die in den Zwischenräumen der Klemmplatten 25 liegenden Brennstäbe 31 ein. Durch Anfassen des Manipulators an dem Bügel der Zuglaschen 37, 39 und dem Ziehen in Achsrichtung der Brennstäbe 31 oder stationärem Festhalten der Vorrichtung und Ziehen des Brennelements werden die geklemmten Brennstäbe 31 aus der Brennelementstruktur herausgezogen. Nach dem Lösen der Vorrichtung durch entgegengesetztes Drehen der Schraubspindel 33 werden die herausgezogenen Brennstäbe 31 von der Vorrichtung gelöst und können abgelegt werden. Die Vorrichtung ist zum erneuten Einsatz bereit.

Bezugszeichenliste 11 Spannstange
13 Führungsstange
15 Druckplatte
17 Druckplatte
19 Begrenzungskopf
21 Begrenzungskopf
23 Begrenzungskopf
25 Klemmplatten
27 Distanzringe
29 Distanzringe
31 Brennstäbe
33 Schraubspindel
35 Innengewinde
37 Zuglasche .
39 Zuglasche
41 Enden der Klemmplatten

**Ansprüche**

1. Vorrichtung zum Herausziehen von mehreren Brennstäben aus einer Brennelementstruktur mit einer klemmfähigen Greifvorrichtung zum Erfassen der Brennstäbe,
**gekennzeichnet durch** folgende Merkmale:

a) eine obere Führungsstange (13) und eine untere Spannstange (11) sind horizontal übereinanderliegend angeordnet,

b) senkrecht zu den Stangenachsen sind von den Stangen (11 und 13) durchdrungene Klemmplatten (25) mit Abstand zueinander parallel angeordnet,

c) zwischen den Klemmplatten (25) sind auf den Stangen (11 und 13) Distanzringe(27, 29) angeordnet, wobei die Breite der auf der unteren Spannstange (11) angebrachten Distanzringe (29) geringfügig kleiner ist als der Durchmesser der Brennstäbe (31),

d) eine die Klemmplatten (25) zusammendrückende Spannvorrichtung (33, 35) ist auf der Spannstange(11) angebracht,

e) eine Handhabung (37) zum Halten oder Ziehen der Vorrichtung während des Ziehens der Brennstäbe (31).

2. Vorrichtung nach Anspruch 1, dadurch gekennzeichnet, daß die Klemmplatten (25) unten in sich verjüngenden Enden (41) auslaufen.

3. Vorrichtung nach Anspruch 1, dadurch gekennzeichnet, daß in den Endbereichen der oberen und unteren Stangen (11 und 13) Druckplatten (15, 17) angeordnet sind.

4. Vorrichtung nach Anspruch 1 bis Anspruch 3, dadurch gekennzeichnet, daß auf der Führungsstange (13) und der Spannstange (11) außerhalb der Klemmplattenanordnung außen an den Druckplatten (15, 17) benachbart liegende Zuglaschen (37, 39) gelagert sind, die über einen Bügel fest miteinander verbunden oder in einer ortsfesten Lagerstelle angebracht sind.

FIG.1

FIG.2

FIG.3

0 285 819